(19) Europäisches Patentamt
European Patent Office
Office européen des brevets

(11) Publication number: 0 303 441 A2

(12) # EUROPEAN PATENT APPLICATION

(21) Application number: 88307349.6

(22) Date of filing: 09.08.88

(51) Int. Cl.[4]: C 08 G 12/30
C 08 G 12/42, C 08 L 61/26,
C 09 D 3/50

(30) Priority: 10.08.87 JP 198236/87

(43) Date of publication of application:
15.02.89 Bulletin 89/07

(84) Designated Contracting States: DE FR GB

(71) Applicant: NIPPON SHOKUBAI KAGAKU KOGYO CO. LTD.
5-1, Koraibashi Higashi-ku
Osaka (JP)

(72) Inventor: Adachi, Masato
24-8 Tsukahara 4-chome
Takatsuki-shi Osaka-fu (JP)

Yatagai, Hidetada
23-2 Koushienguchi 3-chome
Nishinomiya-shi Hyogo-ken (JP)

(74) Representative: Rees, David Christopher et al
Kilburn & Strode 30 John Street
London WC1N 2DD (GB)

(54) **Thermosetting resin composition for coating.**

(57) A thermosetting resin composition for coating, comprising an aminoformaldehyde resin (I) and a macromolecular compound (II) containing in its molecular a functional group capable of reacting with the aminoformaldehyde resin (I). The aminoformaldehyde resin (I) is the reaction product (Ia) of an amino compound (A) containing as an essential component, cyclohexane-carboguanamine and/or norbornanecarboguanamine with formaldehyde (B), and/or the reaction product (Ib) of amino compound (A) with formaldehyde (B) and an alcohol (C).

EP 0 303 441 A2

## Description

# THERMOSETTING RESIN COMPOSITION FOR COATING

The present invention relates to thermosetting resin coating compositions.

Known thermosetting resin coating compositions include those obtained by combining macromolecular compounds, having a functional group including such cross-linking agents as melamine-formaldehyde resins (hereinafter referred to "melamine resins" for short) and benzoguanamine-formaldehyde resins (hereinafter referred to as "benzoguanamine resins" for short), namely the reaction products of melamine, benzoguanamine etc., with formaldehyde, and the alkyl-etherification products of such reaction products.

Melamine resins are highly susceptible to a cross-linking reaction because of their particular structure. When they are combined with macromolecular compounds possessing a functional group and then thermoset, variations in the curing conditions may significantly affect the properties such as hardness and corrosion resistance to be acquired by the resultant thermoset resin compositions. Further, the so-called phenomenon of over-cure is liable to impair the flexibility of the resultant film.

Benzoguanamine resins are free from the phenomenon of over-cure to which the melamine resins are vulnerable. Since they are deficient in weatherability, however, they are not suitable for uses which require the produced thermoset resin composition to be subjected to light for a long time.

The copolycondensate of cyclohexane-carboguanamine or norbornanecarboguanamine, which is used in the present invention, with melamine and the use of copolycondensate as a moulding material are both disclosed in U.S.P. 3,379,661. Further, the fact that the shaped articles obtained from the moulding material are excellent in resistance to light and in stain resistance is known to the art. However, the US Patent makes no reference nor suggestion regarding the use of the copolycondensates in a coating material. Because the disclosed method is concerned with forming the copolycondensates as the moulding material to produce shaped articles, it does not follow that this method ought to be applicable to the production of coating materials using the same copolycondensates. The US Patent specification makes absolutely no mention of flexibility, gloss, corrosion resistance, etc. of the copolycodensates, which are of course desired properties in a coating material. It has not been possible therefore to infer from the known facts mentioned above, the possibility of these copolycondensates imparting the various properties which a coating is required to manifest.

It is an object of the present invention to provide a thermosetting resin composition for coating which is capable of forming a coating which is superior in various properties such as weatherability, flexibility, gloss and corrosion resistance.

According to the invention there is provided a thermosetting resin composition for coating characterised in that it comprises an aminoformaldehyde resin (I) and a marcromolecular compound (II) containing in its molecular unit a functional group capable of reacting with the aminoformaldehyde resin (I), in which the amino formaldehyde resin is the reaction product (Ia) of an amino compound (A) containing as an essential component at least one carboguanamine (a) represented by the formula (i):

(i)

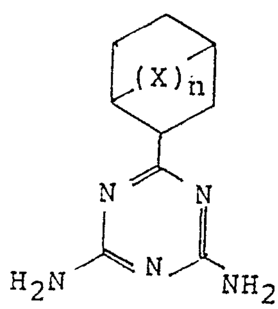

wherein X is $CH_2$ and n is 0 or 1, with formaldehyde (B), and/or is the reaction product (Ib) of the amino compound (A) with formaldehyde (B) and an alcohol (C).

Preferably, the content of the carboguanamine (a) in the amino compound (A) is in the range of 20 to 100% by weight or 80 to 100% by weight. Preferably the reaction product (Ib) is an essential component of the aminoformaldehyde resin (I) and is obtained by using an aliphatic alcohol having 1 to 4 carbon atoms as the alcohol (C).

The alcohol (C) may be used in an amount in the range of 1.5 to 15 mols per mol of the amino compound (A). The reaction product (Ib) may be water-soluble and may be obtained by using methanol as the alcohol (C).

The amino compound (A) may contain melamine in an amount in the range of 40 to 80% by weight and carboguanamine (a) in an amount in the range of 20 to 60% by weight. The reaction products (Ia) and (Ib) may be obtained by using the formaldehyde (B) in am amount in the range of 1.5 to 10 mols per mol of the amino compound (A).

Preferably, the macromolecular compound (II) contains one or more of the following functional groups: hydroxyl group, carboxyl group, epoxy group, amide group, methylolamide group, alkoxymethylolamide group, amino group, silanol group, and alkoxysilyl group, the most preferred being the hydroxyl, carboxyl, epoxy, methylolamide and alkoxymethylolamide groups.

Preferably, the macromolecular compound (II) is at least one of the following resins: acrylic resin, vinyl resin, alkyd resin, saturated polyester resin, epoxy resin, urethane resin, fluorocarbon resin, polyamide resin, siloxane resin, silicon-modified polyester resin, and silicon-modified acrylic resin, the most preferred being alkyd, saturated polyester, silicon-modified polyester and silicon-modified acrylic resins.

Preferably, the non-volatile weight ratio of the aminoformaldehyde resin (I) to the macromolecular compound (II) is in the range of 5 to 70 : 95 to 30. Preferably, the composition also includes an antioxdant, such as a hindered phenol, which may be present in an amount in the range of 0.01 to 10% be weight, based on the nonvolatile amount of the aminoformaldehyde resin (I).

The carboguanamindes (a) represented by the formula (i) comprise cyclohexanecarboguanamine represented by the formula (ii) and norbornanecarboguanamine represented by the formula (iii). The amino compound (A) contains as an essential component thereof at least one of the carboguanamines (a) in a desired proportion.

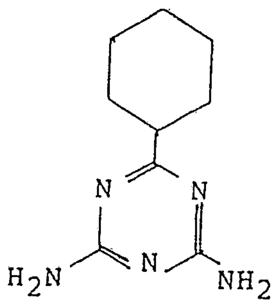

(ii)

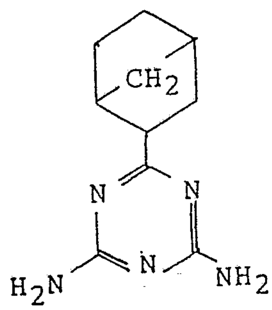

(iii)

While the amino compound (A) contains as an essential component thereof the carboguanamine (a) represented by the foregoing formula, it may optionally contain other compounds not qualifying as a carboguanamine (a), such triazine compounds as melamine, acetoguanamine and benzoguanamine, or compounds such as urea, dicyandiamide, and phenols.

The amount of the carboguanamine (a) to be used ought to be properly selected to suit the purpose for which the produced thermosetting resin composition for coating is used. It should be borne in mind that this invention uses the carboguanamine (a) for the purpose of imparting such properties as weatherability, flexibility, gloss, and corrosion resistance to a film obtained by curing the thermosetting resin composition. The thermosetting resin composition exhibits a tendency toward gradually gaining in these properties in proportion as the content of the carboguanamine (a) in the amino compound (A) is increased. The amount of the carboguanamine (a) to be used in the amino compound (A), therefore, is in the range of 20 to 100% by weight, preferably 80 to 100% by weight. As other compounds than the carboguanamine (a), contained in the amino compounds (A), it is desired to be melamine from the standpoint of weatherability. Further, melamine may be suitably used so as to render the aminoformaldehyde resin (I) a hydrophilicity.

The aminoformaldehyde resin (I) for this invention is obtained by using the amino compound (A) containing as an essential component thereof the carboguanamine (a), the formaldehyde (B), and optionally the alcohol (C) as raw materials. The methylolation product of the amino compound (A), the dehydrated condensate of the methylolated product, and the alkyl-etherification products of the methylolated compound and the dehydarated condensate answer the description of the aminoformaldehyde resin (I).

This aminoformaldehyde resin (I) is produced not exclusively by any specific method but by any of methods. Specifically, the following methods are available for the production.

(1) A method which comprises heating the amino compound (A) and the formaldehyde (B) in an aqueous solution thereof adjusted to a pH value in the range of 7 to 10, preferably 7 to 9 thereby effecting methylolation.

(2) A method which comprises heating the amino compound (A) and the formaldehyde (B) in an aqueous solution thereof adjusted to a pH value in the range of 7 to 10, preferably 7 to 9, thereby effecting methylolation and subsequently subjecting the methylolation product to a dehydration condensation reaction at a pH value in the range of 3 to 7, preferably 4 to 7.

(3) A method which comprises heating the amino compound (A) and the formaldehyde (B) in an

aqueous solution thereof adjusted to a pH value in the range of 3 to 7, preferably 4 to 7, thereby effecting methylolation and dehydration condensation simultaneously.

(4) A method which comprises heating the methylolation product of the amino compound (A) obtained by any of the methods (1) to (3) described above or the dehydrated condensate of the methylolation product with the alcohol (C) in an aqueous solution thereof adjusted to a pH value in the range of 3 to 7, preferably 4 to 7, thereby effecting alkyl etherification.

(5) A method which comprises heating the amino compound (A) and the formaldehyde (B) in a solution thereof in the alcohol (C) adjusted to a pH value in the range of 3 to 7, preferably 4 to 7 thereby effecting methylolation, and alkyl etherification simultaneously.

As the form of the aminoformaldehyde resins (I), the reaction products (Ia) and/or (Ib) obtained from the methods metntioned above may be usable as it is, or optionally it may be used by distilling the volatiles out, or diluting with water and/or a suitable solvent. In this case, the amino-formaldehyde resin (I) is generally in liquid or solid state which contains nonvolatiles in the range of 30 to 100% by weight, preferably 50 to 100% by weight.

In any of the methods described above, the amount of the formaldehyde (B) to be used is desired to be in the range of 1.5 to 10 mols, preferably 1.5 to 8 mols, per mol of the amino compound (A). If this amount is less than 1.5 mols, the produced aminoformaldehyde resin (I) fulfils its function insufficiently as a cross-linking agent. Conversely if the amount exceeds 10 mols, the excess does not bring about any proportionate addition to the function of the produced cross-linking agent and only proves wasteful. The reaction is generally carried out at a temperature in the range of 50 to 200°C, preferably 50 to 150°C.

Which of the products of the methods (1) to (5) described above is to be used as the aminoformaldehyde resin (I) for this invention is a question to be decided freely to suit the behavior which the produced thermosetting resin composition for coating is desired to manifest or the purpose for which the resin composition is intended. Generally, it is desirable to use the alkyl etherification product obtained by the method of (4) or the method of (5) in terms of the pot life of the aminoformaldehyde resin (I) itself and the thermosetting resin composition for coating and the compatibility of the aminoformaldehyde resin (I) with the macromolecular compound (II) which will be described more specifically later on.

As examples of the alcohol (c) to be used in the alkyl etherification reaction, such aliphatic alcohols as methanol, ethanol, propanol, butanol, hexanol, and octanol, such alicyclic alcohols as cyclohexanol, such ether alcohols as ethylene glycol monomethyl ether and ethylene glycol monoethyl ether, and such ketone alcohols as diacetone alcohol. These alcohols may be used either independently or in the form of a mixture of two or more members. The alcohol thus used serves concurrently as a solvent for the aforementioned reaction. Among the alcohols enumerated above, the aliphatic alcohols of 1 to 4 carbon atoms, namely methanol, ethanol, n-propanol, isopropanol, n-butanol, isobutanol, and sec-butanol, prove to be particularly desirable in terms of the compatibility with the macromolecular compound (II) and the various properties of the coating film to be produced eventually. The amount of the alcohol to be used is desired to be in the range of 1.5 to 15 mols, preferably 1.5 to 10 mols, per mols of the amino compound (A). If the amount is less than 1.5 mols, proceeding of alkyl etherification is incomplete. Conversely the amount exceeds 15 mols, it hardly effects on the proceeding of the alkyl etherification, and, therefore, is not economically advantageous.

The macromolecular compound (II) to be used in this invention has no particular restriction except for the sole requirement that it should contain in the molecular unit thereof a functional group capable of reacting with the aminoformaldehyde resin (I) mentioned above. Examples of the functional group which can react with the aminoformaldehyde resin (I) include hydroxyl group, carboxyl group, epoxy group, amide group, methylolamide group, alkoxymethylolamide group, amino group, silanol group, and alkoxysilyl group. In terms of reactivity, hydroxyl group, carboxyl group, epoxy group, methylolamide group, and alkoxymethylolamide group prove to be particularly desirable.

Examples of the macromolecular compound (II) are acrylic resin, vinyl resin, alkyd resin, saturated polyester resin, epoxy resin, urethane resin, fluorocarbon resin, polyamide resin, siloxane resin, silicone-modified polyester resin, and silicone-modified acrylic resin which contains various functional groups mentioned above in their molecular units. In terms of the compatibility with the aminoformaldehyde resin (I) and the various properties of the coating film eventually obtained, acrylic resin, alkyd resin, saturated polyester resin, silicone-modified polyester resin, and silicone-modified acrylic resin prove to be particularly desirable among other possible macromolecular compoudns (II). The macromolecular compound (II) may be used either soluble in organic solvent or soluble in water. The form of the macromolecular compound (II) is not specifically limited. For example, the macromolecular compound (II) can be in the state of solid, or solution or dispersion in a suitable solvent. In this case, water and/or organic solvent can be used as the solvent.

The thermosetting resin composition for coating of the present invention comprises the aminoformaldehyde resin (I) and the macromolecular compound (II) described above. Though the ratio of these two components in the resin composition is not specifically restricted, it is desired to be in the range of 5 - 70/95-30, preferably 10-50/90-50, in weight (I)/(II) ratio, based on nonvolatile component.

Optionally, the thermosetting resin composition of the present invention for coating may incorporate therein, in addition to the components mentioned above, melamine resin, benzoguanamine resin, etc. which do not qualify as the aminoformaldehyde resin (I), in a total amount incapable of jeopardize the object of this invention. It may incorporate such known additives as pigment, dye, filler, surfactant, antistatic agent, antioxidant, etc. to suit the particular purpose for which it is intended. Particularly when the curing is to be

carried out at a temperature exceeding 220° C, the incorporation of an antioxidant is effective in preventing the produced coating film from being discolored by heat. The antioxidant has no particular restriction. Any of the commercially available antioxidants can be used effectively. A hindered phenol can be used particularly effectively among other antioxidants available at all. The amount of the antioxidant to be used is generally is in the range of 0.01 to 10% by weight, preferably 0.05 to 2.0 % by weight, based on the amount of the nonvolatile content of aminoformaldehyde resin (I).

The thermosetting resin composition of this invention for coating may be a mixture of the aminoformaldehyde resin (I), the macromolecular compound (II), the additives and the other resisns than aminoformaldehyde resin (I) as it is, or that of having them dispersed or dissolved in a suitable organic solvent, a water-soluble solvent or water.

The thermosetting resin composition of this invention for coating can be used advantageously both in organic solvent type coating materials and in water borne coating materials. In the case of using the aminoformaldehyde resin (I) for the organic solvent type coating material, it is preferable to exclude water as possible.

For use in an aqueous coating material, it is desirable that the aminoformaldehyde resin (I) possesses a solubility in water. The aminoformaldehyde resin (I) of this description can be obtained by using an amino compound (A) having a melamine content in the range of 40 to 80% by weight, formaldehyde (B), and optionally an alcohol (C) as raw materials and performing a condensation reaction by the procedure described above. For the thermosetting resin composition for coating to acquire pot life, use of the alcohol (C) is an essential requirement. To avoid impairing the solubility of the aminoformaldehyde resin (I) in water, the alcohol (C) thus used is desired to be methanol. For the characteristic features of this invention to be retained intact, the amino compound (A) is desired to contain the carboguanamine (a) in an amount in the range of 20 to 60% by weight. Optionally, the amino compound (A) may contain an amino compound other than the carboguanamine (a) and melamine in a suitable amount. The water-soluble aminoformaldehyde resin (I) obtained as described above can be advantageously used in water borne coating materials together with the macromolecular compound (II) soluble or dispersed in water. It may also used as organic solvent type coating material together with macromolecular compounds (II) soluble in organic solvent.

The properties of the thermosetting resin composition of the present invention are scarcely affected by variations in the curing conditions because it comprises the aminoformaldehyde resin (I) and the macromolecular compound (II). The coating films produced using this resin composition are excellent in such properties as wetherability, gloss, and corrosion resistance.

The thermosetting resin composition of this invention for coating, therefore, can be advantageously used in coating materials to be applied to automobiles, household electric appliances, cans, office appliances, etc.

The invention may be carried into practice in various ways and some specific embodiments will now be described with reference to the following non-limiting working examples. Wherever percentages(%) and parts are mentioned in the examples, they are meant as percentages and parts by weight unless otherwise specified.

The viscosities indicated by letters of the alphabet were measured by the use of Gardner-Holdt viscosity tube.

Production Example 1

In a reaction vessel provided with a thermometer, a stirrer, a reflux condenser, and a device for recovery of solvent, 50.0 g of cyclohexanecarboguanamine and 149.2 g of an aqueous 37% formaldehyde solution were mixed and the resultant solution was adjusted to a pH value of about 8.8 by addition of triethylamine. The solution was methylolated at 90° C for 75 minutes, then dehydrated by elevating the temperature to 105° C over a period of about 90 minutes. Then, 155.7 g of n-butanol was added and the resultant solution was adjusted to a pH value of about 4.0 by addition of oxalic acid. The resultant reaction solution was refluxed for four hours with simultaneous expulsion of water from the system. The residue of the reflux was adjusted to a pH value of 7.0 by addition of triethylamine and then heated under a vacuum to expel excess butanol out of the system. As the result, an aminoformaldehyde resin (I-1) possessing a nonvolatile content of 70% and a viscosity of 13 poises (25° C) was obtained.

Production Example 2

An aminoformaldehyde resin (I-2) possessing a nonvolatile content of 70% and a viscosity of 16 poises (25° C) was obtained by following the procedure of Production Example 1, except that 53.1 g of norbornanecarboguanamine was used in the place of 50.0g of cyclohexanecarboguanamine.

Production Example 3

In the same reaction vessel as used in Production Example 1, 35.0 g of cyclohexanecarboguanamine, 15.0 g of melamine, and 90.0 g of a butanol 40.3 % formaldehyde solution were mixed and the resultant solution was adjusted to a pH value of 8.0 by addition of an aqueous 10% sodium carbonate solution. The resultant solution was left reacting, with the water produced during the reaction expelled by means of azeotropy of water with

butanol. After the reaction temperature reached 117°C, the reaction was further contiued for one hour. As the result, an aminoformaldehyde resin (I-3) possessing a nonvolatile content of 70% and a viscosity of 45 poises (25°C) was obtained.

Production Example 4

In the same reaction vessel as used in Production Example 1, 15.0 g of cyclohexanecarboguanamine, 35.0 g of melamine, and 69.0 g of methanol 40.3% formaldehyde solution were mixed and the resultant solution was adjusted to a pH value of 8.0 by addition of an aqueous 10% sodium carbonate solution. The resultant solution was heated and stirred. The resultant mixture was left reacting by being refluxed for one hour. The reaction solution, with the pH value readjusted to 5.8 by addition of formic acid, was left reacting further until the reaction temperature reached about 80°C. After this temperature was reached, the reaction solution was subjected to distillation for expulsion of the formed water with methanol. As the result, an aminoformaldehyde resin (I-4) possessing a nonvolatile content of 66% and a viscosity of 15 poises (25°C) was obtained.

Production Example 5

In the same reaction vessel as used in Production Example 1, 100 g of cyclohexanecarboguanamine, 0.33 g of an aqueous 10% sodium carbonate solution, and 127 g of an aqueous 37% formaldehyde solution were placed and left reacting at 90°C for four hours. The resultant reaction solution was heated up to 120°C for expulsion of the residual formaldehyde and water out of the reaction system. As the result, a solid aminoformaldehyde resin (I-5) having 97% of nonvolatile content was obtained.

Examples 1 to 5

On a paint shaker, a varying aminoformaldehyde resin [(I-1) to (I-5) obtained in Production Examples 1 to 5] and varying ingredients indicated in Table 1 were dispersed to prepare coating materials A, B, C, D, and E using as a vehicle thereof thermosetting resin compositions containing the aminoformaldehyde resins and a commercially available acrylic resin (a product possessing a nonvolatile content of 50%, a viscosity of W to Z, and an acid number of 2 to 5; manufactured by Nisshoku Aro Chemicals Co., Ltd. and marketed under trademark designation of "Aroset 5813").

The coating materials A, B, C, D, and E were severally applied in an amount calculated to produce a dry coating layer 33 microns in thickness to an iron sheet treated with zinc phosphate and the applied layers were heated in a oven to produce coated sheets. The coating films thus obtained were evaluated. The results of the evaluation are shown in Table 2.

Controls 1 and 2

Coating materials A and B for comparison using as a vehicle therefor resin compositions for comparison were obtained by repeating the procedure of Example 1, except that the benzoguanamine resin and melamine resin indicated below were used in the proportions indicated in Table 1 in the place cf the aminoformaldehyde resin (I-1).

Benzogulanamine resin (a butanol-modified benzoguanamine resin possessing a nonvolatile content of 70% and a viscosity of R to U).

Melamine resin (butanol-modified melamine resin possessing a nonvolatile content of 60% and a viscosity of Q to T).

The coating materials A and B for comparison produced as described above were applied to the same iron sheets as Example 1 to produce coated sheets by repeating the procedure of Example 1. The coating films were evaluated. The results of the evaluation are shown in Table 2.

Table 1

| Example | | Example 1 | Example 2 | Example 3 | Example 4 | Example 5 | Control 1 | Control 2 |
|---|---|---|---|---|---|---|---|---|
| Coating material | | A | B | C | D | E | A for comparison | B for comparison |
| Composition of coating material (parts) | Acrylic resin | 140 | 140 | 140 | 140 | 140 | 140 | 140 |
| | Aminoformaldehyde resin (I-1) | 28.6 | | | | | | |
| | Aminoformaldehyde resin (I-2) | | 28.6 | | | | | |
| | Aminoformaldehyde resin (I-3) | | | 28.6 | | | | |
| | Aminoformaldehyde resin (I-4) | | | | 30.3 | | | |
| | Aminoformaldehyde resin (I-5) | | | | | 20.0 | | |
| | Benzoguanamine resin | | | | | | 28.6 | |
| | Melamine resin | | | | | | | 33.3 |
| | Epoxy resin (Note 1) | 20 | 20 | 20 | 20 | 20 | 20 | 20 |
| | Titanium dioxide(Note 2) | 100 | 100 | 100 | 100 | 100 | 100 | 100 |
| | Xylene | 60 | 60 | 60 | 60 | 60 | 60 | 60 |
| | Butanol | 15 | 15 | 15 | 13.3 | 23.6 | 15 | 10.3 |

(Note 1) Epoxy resin (methylisobutyl ketone 50% solution, produced by Yuka Shel Epoxy Co., Ltd. and marketed under trademark designation of "Epikote 1001")

(Note 2) Titanium dioxide (produced by Ishihara Sangyo Co., Ltd.)

Table 2

| Example | | Example 1 | | Example 2 | | Example 3 | | Example 4 | | Example 5 | | Control 1 | | Control 2 | |
|---|---|---|---|---|---|---|---|---|---|---|---|---|---|---|---|
| Coating material 4 | | A | | B | | C | | D | | E | | A for comparison | | B for comparison | |
| Curing conditions (°C x 20 minutes) | | 150 | 170 | 150 | 170 | 150 | 170 | 150 | 170 | 150 | 170 | 150 | 170 | 150 | 170 |
| Results of evaluation | Gloss (60°C) | 97 | 96 | 96 | 96 | 95 | 94 | 93 | 90 | 93 | 91 | 95 | 94 | 90 | 85 |
| | Pencil Hardness (Mitsubishi Uni) | H | H | H | H - 2H | H | H - 2H | 2H | 3H | H - 2H | 2H | H | H - 2H | 2H | 3 - 4H |
| | Erichsen Value (mm) | 7.7 | 7.6 | 7.5 | 7.4 | 7.5 | 7.3 | 6.7 | 6.3 | 6.7 | 6.5 | 7.5 | 7.3 | 6.0 | 3.9 |
| | DuPont impact (1kgx50cm) | ○ | ○ | ○ | ○ | ○ | ○ | ○ | ○–△ | ○ | ○ | ○ | ○ | ○ | △ |
| | Resistance to salt spray 200 H (separation width, mm) | 1.1 | 1.4 | 1.0 | 1.5 | 1.2 | 1.6 | 1.5 | 2.0 | 1.5 | 1.9 | 1.0 | 1.3 | 2.0 | 5.0 |
| | Weatherability (W - O - M 500H) | ○ | ○ | ○ | ○ | ○ | ○ | ○ | ○ | ○ | ○ | × | × | ○ | ○ |

Examples 6 to 10

On a paint shaker, a varying aminoformaldehyde resin [(I-1) to (I-5) obtained in Production Examples 1 to 5] and varying ingredients indicated in Table 3 were dispersed to prepare coating materials F, G, H, I, and J using as a vehicle thereof thermosetting resin compositions containing the aminoformaldehyde resins and a commercially available saturated polyester resin (a product possessing a nonvolatile content of 70%, a viscosity of V to $Y^+$, and an acid number of 5 to 8; manufactured by Nisshoku Aro Chemicals Co., Ltd. and marketed under trademark designation of "Aroplaz OB-10").

The coating materials F, G, H, I, and J were severally applied in an amount calculated to produce a dry coating layer 20 microns in thickness to the same iron sheet as Example 1 to produce coated sheets by repeating the procedure of Example 1. These coating films were evaluated. The results are shown in Table 4.

Controls 3 and 4

Coating materials C and D for comparison using as a vehicle thereof resin compositions for comparison were produced by repeating the procedure of Example 6, except that the same benzoguanamine resin and melamine resin as used in Controls 1 and 2 were used in proportions indicated in Table 3 in the place of the aminoformaldehyde resin (I-1).

The coating materials C and D for comparison produced as described above were applied to the same iron sheets as Example 1 to produce coated sheets by repeating the procedure of Example 6. The coating films were evaluated. The results of the evaluation are shown in Table 4.

Table 3

| Example | | Example 6 | Example 7 | Example 8 | Example 9 | Example10 | Control 3 | Control 4 |
|---|---|---|---|---|---|---|---|---|
| Coating material | | F | G | H | I | J | C for comparison | D for comparison |
| Composition of coating material (parts) | Saturated polyester resin | 100 | 100 | 100 | 100 | 100 | 100 | 100 |
| | Aminoformaldehyde resin (I-1) | 42.9 | | | | | | |
| | Aminoformaldehyde resin (I-2) | | 42.9 | | | | | |
| | Aminoformaldehyde resin (I-3) | | | 42.9 | | | | |
| | Aminoformaldehyde resin (I-4) | | | | 45.5 | | | |
| | Aminoformaldehyde resin (I-5) | | | | | 30 | | |
| | Benzoguanamine resin | | | | | | 42.9 | |
| | Melamine resin | | | | | | | 50 |
| | Titanium dioxide | 66.7 | 66.7 | 66.7 | 66.7 | 66.7 | 66.7 | 66.7 |
| | Xylene | 70 | 70 | 70 | 70 | 70 | 70 | 70 |
| | Butanol | 20.4 | 20.4 | 20.4 | 17.8 | 33.3 | 20.4 | 13.4 |

Table 4

| Example | | Example 6 | | Example 7 | | Example 8 | | Example 9 | | Example10 | | Control 3 | | Control 4 | |
|---|---|---|---|---|---|---|---|---|---|---|---|---|---|---|---|
| Coating material | | F | | G | | H | | I | | J | | C for comparison | | D for comparison | |
| Curing conditions (°C x 20 minutes) | | 150 | 170 | 150 | 170 | 150 | 170 | 150 | 170 | 150 | 170 | 150 | 170 | 150 | 170 |
| Results of evaluation | Gloss (60°C) | 95 | 95 | 97 | 96 | 94 | 93 | 90 | 87 | 94 | 92 | 96 | 94 | 84 | 80 |
| | Pencil Hardness (Mitsubishi Uni) | H | H | H | H - 2H | H | 2H | 2H | 3H | 2H | 2H | H | 2H | 2H | 4H |
| | Erichsen Value (mm) | 7.5 | 7.3 | 7.2 | 7.1 | 7.2 | 7.0 | 6.6 | 6.0 | 6.8 | 6.5 | 7.2 | 7.0 | 6.0 | 3.8 |
| | DuPont impact(1kgx50cm) | ○ | ○ | ○ | ○ | ○ | ○ | ○ | ○ | ○ | ○ | ○ | ○ | ○ | △ |
| | Resistance to salt spray 200 H (separation width, mm) | 1.2 | 1.3 | 1.3 | 1.3 | 1.3 | 1.5 | 2.0 | 3.0 | 2.3 | 2.7 | 1.2 | 1.5 | 3.0 | 6.5 |
| | Weatherability (W - O - M 700H) | ○ | ○ | ○ | ○ | ○ | ○ | ○ | ○ | ○ | ○ | × | × | ○ | ○ |

Examples 11 and 12

On a paint shaker, a varying aminoformaldehyde resin [(I-1) and (I-2) obtained in Production Example 1 and Production Example 2] and varying ingredients indicated in Table 5 were dispersed to produce coating materials K and L using as a vehicle thereof thermosetting resin compositions containing the aminoformaldehyde resins and a commercially available alkyd resin (a product possessing a nonvolatile content of 60%, a viscosity of $Z_3$ to $Z_5$, and an acid number of less than 5 ; manufactured by Nisshoku Aro Chemicals Co., Ltd. and marketed under trademark designation of "Aroplaz 28").

Coated sheets were produced by following the procedure of Example 1, except that the coating materials K and L obtained as described above were used in the place of the coating material A. The coating films were evaluated. The results of this evaluation are shown in Table 6.

Controls 5 and 6

Coating materials E and F for comparison using as a vehicle thereof resin compositions for comparison were produced by repeating the procedure of Example 11, except that the same benzoguanamine resin and melamine resin as used in Controls 1 and 2 were used in proportions indicated in Table 5 in the place of the aminoformaldehyde resin (I-1).

The coating materials E and F for comparison produced as described above were applied to the same iron sheets as Example 1 to produce coated sheets by repeating the procedure of Example 1. The coating films were evaluated. The results of this evaluation are shown in Table 6.

Table 5

| Example | | Example 11 | Example 12 | Control 5 | Control 6 |
|---|---|---|---|---|---|
| Coating material | | K | L | E for comparison | F for comparison |
| Composition of coating material (parts) | Alkyd resin | 70 | 70 | 70 | 70 |
| | Aminoformaldehyde resin (I-1) | 25.7 | | | |
| | Aminoformaldehyde resin (I-2) | | 25.7 | | |
| | Benzoguanamine resin | | | 25.7 | |
| | Melamine resin | | | | 30 |
| | Titanium dioxide | 40 | 40 | 40 | 40 |
| | Xylene | 46.1 | 46.1 | 46.1 | 41.8 |

Table 6

| Example | | Example 11 | | Example 12 | | Control 5 | | Control 6 | |
|---|---|---|---|---|---|---|---|---|---|
| Coating material | | K | | L | | E for comparison | | F for comparison | |
| Curing conditions (°C x 20 minutes) | | 120 | 140 | 120 | 140 | 120 | 140 | 120 | 140 |
| Results of evaluation | Gloss (60°C) | 96 | 95 | 95 | 95 | 95 | 96 | 92 | 88 |
| | Pencil Hardness (Mitsubishi Uni) | B | B | B | B | B | HB | HB | H |
| | Erichsen Value (mm) | 9.5 | 9.2 | 9.4 | 9.3 | 9.3 | 9.2 | 8.5 | 6.0 |
| | Mandrel test (2mm ϕ) | ○ | ○ | ○ | ○ | ○ | ○ | ○ | × |
| | Resistance to salt spray, 200 H (separation width, mm) | 0.5 | 0.7 | 0.6 | 0.7 | 0.5 | 0.8 | 1.0 | 4.2 |
| | Weatherability (W - O - M 300H) | ○ - △ | ○ - △ | ○ - △ | ○ - △ | × | × | ○ - △ | ○ - △ |

Examples 13 and 14

On a paint shaker, a varying aminoformaldehyde resin [(I-1) and (I-2) obtained in Production Examples 1 and 2] and varying ingredients indicated in Table 7 were dispersed to produce coating materials M and N using as a vehicle thereof thermosetting resin compositions containing the aminoformaldehyde resins and a commercially available silicone-modified polyester resin (a product possessing a nonvolatile content of 60%, a viscosity of V to Z, and an acid number of less than 7; manufactured by Nisshoku Aro Chemicals Co., Ltd. and marketed under trademark designation of "Aroplaz 1713-R-60").

Coated sheets were produced by following the procedure of Example 1, excepting the coating materials M and N obtained as described above were used in the place of the coating material A. The coating films were evaluated. The results of this evaluation are shown in Table 8.

Controls 7 and 8

Coating materials G and H for comparison using as a vehicle thereof resin compositions for comparison were produced by repeating the procedure of Example 13, except that the same benzoguanamine resin and melamine resin as used in Controls 1 and 2 were used in the place of the aminoformaldehyde resin (I-1).

The coating materials G and H for comparison produced as described above were applied to the same iron sheets as Example 1 to produce coated sheets by following the procedure of Example 13. The coating films were evaluated. The results of this evaluation are shown in Table 8.

Table 7

| Example | | Example 13 | Example 14 | Control 7 | Control 8 |
|---|---|---|---|---|---|
| Coating material | | M | N | G for comparison | H for comparison |
| Composition of coating material (parts) | Silicone-modified polyester resin | 75 | 75 | 75 | 75 |
| | Aminoformaldehyde resin (I-1) | 7.1 | | | |
| | Aminoformaldehyde resin (I-2) | | 7.1 | | |
| | Benzoguanamine resin | | | 7.1 | |
| | Melamin resin | | | | 8.3 |
| | Titanium dioxide | 50 | 50 | 50 | 50 |
| | Xylene | 30 | 30 | 30 | 30 |
| | Butanol | 19.7 | 19.7 | 19.7 | 18.5 |

Table 8

| Example | | Example 13 | | Example 14 | | Control 7 | | Control 8 | |
|---|---|---|---|---|---|---|---|---|---|
| Coating material | | M | | N | | G for comparison | | H for comparison | |
| Curing conditions (°C x 60 seconds) | | 250 | 300 | 250 | 300 | 250 | 300 | 250 | 300 |
| Results of evaluation | Gloss (60°C) | 95 | 94 | 96 | 94 | 94 | 94 | 94 | 86 |
| | Pencil hardness (Mitsubishi Uni) | F | F | F | F | F | F - H | H | 2H |
| | Erichsen value (mm) | 8.5 | 8.3 | 8.3 | 8.4 | 8.2 | 8.3 | 7.0 | 5.0 |
| | DuPont impact (1 kg x 50 cm) | ○ | ○ | ○ | ○ | ○ | ○ | ○ | △ |
| | Bending (2T) | ○ | ○ | ○ | ○ | ○ | ○ | ○ - △ | × |
| | Weatherability (W-O-M, 1500 H) | ○ - △ | ○ - △ | ○ - △ | ○ - △ | ○ | ○ | ○ - △ | ○ - △ |

Example 15

On a paint shaker, the aminoformaldehyde resin (I-4) obtained in Production Example 4 and ingredients indicated in Table 9 were dispersed to produce a water type coating material O using as a vehicle thereof a thermosetting resin composition containing the aminoformaldehyde resin (I-4) and a commercially available water-soluble acrylic resin (a product possessing a nonvolatile content of 50%, a viscosity of Z to $Z_3$, and a pH value of 8 to 9; manufactured by Nishoku Aro Chemicals Co., Ltd. and marketed under trademark designation of "Arolon 76"). The coating material O was applied in an amount calculated to produce a dry coating layer 35 microns to a cold-rolled steal (bright). The steel sheet thus coated was heated in a oven to produce a coated sheet. The coating film thus formed on the sheet was evaluated. The results of this evaluation are shown in Table 10.

Control 9

A water borne coating material I for comparison using as a vehicle a resin composition for comparison was obtained by repeating the procedure of Example 15, except that a commercially available water-soluble melamine resin (methanol-modified melamine resin possessing a nonvolatile content of 70% and a viscosity of A or below) was used in a proportion indicated in Table 9 in the place of the aminoformaldehyde (I-4). A coated sheet was produced by following the procedure of Example 15, except that the coating material I for comparison was used in the place of the coating material 0. This coating films was evaluated. The results of this evaluation are shown in Table 10.

Table 9

| Example | | Example 15 | Control 9 |
|---|---|---|---|
| Coating material | | O | I for comparision |
| Composition of coating material (parts) | Water-soluble acrylic resin | 150 | 150 |
| | Aminoformaldehyde resin (I-4) | 37.9 | |
| | Water-soluble melamine resin | | 35.7 |
| | Titanium dioxide | 81.8 | 81.8 |
| | Butyl cellosolve | 30 | 32.2 |
| | Deionized water | 155 | 155 |
| | L-5310 (Note 3) | 0.2 | 0.2 |

(Note 3) Flow control agent (produced by Nippon Unicar Co., Ltd.

Table 10

| Example | | Example 15 | | Control 9 | |
|---|---|---|---|---|---|
| | Coating material | O | | I for comparison | |
| | Curing conditions (°C x 30 minutes) | 150 | 170 | 150 | 170 |
| Results of evaluation | Gloss (60°) | 95 | 92 | 90 | 85 |
| | Pencil hardness (Mitsubishi Uni) | H | 2H | 2H | 4H |
| | Fastness of adhesion (checkerboard test) | 100/100 | 100/100 | 100/100 | 90/100 |
| | Erichsen value (mm) | 7.5 | 7.0 | 6.5 | 3.9 |
| | DuPont impact (1 kg x 30 cm) | ○ | ○ | ○ | × |
| | Resistance to salt spray (150 H) (separation width, mm) | 1.5 | 2.0 | 3.5 | 5.5 |
| | Weatherability (W-O-M, 500H) | ○ | ○ | ○ | ○ |

Examples 16 to 19

By mixing the aminoformaldehyde resin (I-1) obtained in Production Example 1 and varying ingredients indicated in Table 11, there were obtained clear coating materials, P, Q, R, and S using as a vehicle thereof thermosetting resin compositions containing the aminoformaldehyde resin (I-1) and the same commercially available acrylic resin (marketed under trademark designation of "Aroset 5813") as Example 1.

Then, the coating material B for comparison obtained in Control 2 was applied in an amount calculated to produce a dry coating layer 20 microns in thickness to a tin plate. The plate thus coated was heated in a oven at 150°C for 20 minutes to produce a white sheet.

The clear coating materials P, Q, R, and S were severally applied in an amount calculated to produce a dry coating layer 20 microns in thickness to the white sheets prepared as described. The sheets thus coated were heated in a oven to produce sheets having a white coating and a claer coating superposed thereon. The coatings thus obtained were tested for degree of discoloration as compared with that of the white sheet without clear coating. The results are shown in Table 12.

Table 11

| Example | | Example 16 | Example 17 | Example 18 | Example 19 |
|---|---|---|---|---|---|
| | Coating material | P | Q | R | S |
| Composition of coating material evaluation | Acrylic resin | 60 | 60 | 60 | 60 |
| | Aminoformaldehyde resin (I-1) | 28.6 | 28.6 | 28.6 | 28.6 |
| | Irganox 1010 (Note 4) | 0.02 | 0.1 | 0.2 | 0 |
| | Butyl cellosolve | 30 | 30 | 30 | 30 |

(Note 4) Hindered phenol type antioxidant (produced by Ciba Geigy AG)

Table 12

| Example | Example 16 | | | Example 17 | | | Example 18 | | | Example 19 | | |
|---|---|---|---|---|---|---|---|---|---|---|---|---|
| Coating material | P | | | Q | | | R | | | S | | |
| Curing conditions for clear coating (°C x 5 min.) | 200 | 220 | 250 | 200 | 220 | 250 | 200 | 220 | 250 | 200 | 220 | 250 |
| Degree of discoloration of coating ($\Delta$E value, compared with white sheet) | 0.7 | 2.0 | 5.9 | 0.6 | 1.9 | 4.6 | 0.6 | 1.5 | 4.4 | 0.7 | 3.4 | 10.6 |

It is clearly noted from the results of Table 12 that the thermosetting coating resin composition of this invention which contained an antioxidant in the formaldehyde resin (I) suffered from a notably lower degree of discoloration than the countertype containing no antioxidant when the curing was made at a temperature exceeding a fixed level.

It is also clearly noted from the results of evaluation given in Tables 2, 4, 6, 8, and 10 that the coating materials using as a vehicle thereof the thermosetting coating resin compositions of this invention were excellent in such properties as gloss, flexibility, weatherability, and corrosion resistance and did not entail the phenomenon of over-cure, causing dispersion in hardenss, flexibility, etc. owing to variations in curing conditions.

In Tables 2, 4, 6, 8, and 10 which indicate the evaluation of properties of Examples, evaluations not indicated with value are as follows:

DuPont impackt:
○ : absence of change
○-Δ : occurrence of slightly partial crack
Δ : occurrence of partial crack
× : occurrence of crack

Weatherability:
○ : absence of change
○-Δ : presence of slight change of color and gloss
Δ : presence of change of color and gloss
× : presence of strong change of color and gloss

Mandrel Test(2mm ∅ ):
○ : absence of crack
× : occurrence of crack

Bending (2T):
○ : absence of crack
○-Δ : slight occurrence of crack
× : occurrence of crack

In Tables 2, 4, 6, 8, and 10, evaluation and criterion of "Gloss", and "Pencil hardness" were based on JIS KO5400 (1979).

In Tables 2, 4, 6, and 10, evaluation of "Resistance to salt spray" was based on the salt spray test in JIS K 5400 (1979), and criterion thereof was carried out by applying an adhesive tape to the cut portion, then peeling it off, and measuring the width on the side of the coating film peeled along the cut portion, and indicated in mm.

In Table 10, evaluation and criterion of "Fastness of adhesion" were based on checkerboard test described in JIS K 5400 (1979).

## Claims

1. A thermosetting resin composition for a coating characterised in that it comprises an aminoformaldehyde resin (I) and a marcromolecular compound (II) containing in its molecular unit a functional group capable of reacting with the aminoformaldehyde resin (I), in which the amino formaldehyde resin is the reaction product (Ia) of an amino compound (A) containing as an essential component at least one carboguanamine (a) represented by the formula (i):

(i)

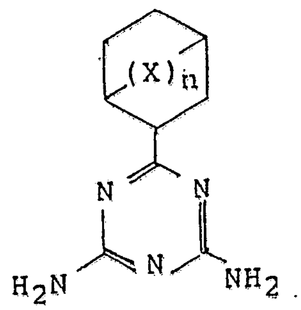

wherein X is $CH_2$ and n is 0 or 1, with formaldehyde (B), and/or is the reaction product (Ib) of the amino compound (A) with formaldehyde (B) and an alcohol (C).

2. A composition as claimed in Claim 1, characterised in that the content of the carboguanamine (a) in the amino compound (A) is in the range of 20 to 100% by weight or 80 to 100% by weight.

3. A composition as claimed in Claim 1 or Claim 2 characterised in that the reaction product (Ib) is an essential component of the aminoformaldehyde resin (I) and is obtained by using an aliphatic alcohol having an alicyclic alcohol, a diol, a triol, an ether alcohol, and/or a ketone alcohol as the alcohol.

4. A composition as claimed in Claim 3 characterised in that the alcohol (C) is an aliphatic alcohol having 1 to 4 carbon atoms.

5. A composition as claimed in any preceding claim characterised in that the amino compound (A) contains melamine in an amount in the range of 40 to 80% by weight and carboguanamine (a) in an amount in the range of 20 to 60% by weight.

6. A composition as claimed in Claim 5 characterised in that the reaction product (Ib) is water-soluble and is obtained by using methanol as the alcohol (C).

7. A composition as claimed in any preceding claim characterised in that the reaction product (Ib) is an essential component of the aminoformaldehyde resin (I) and is obtained by using the alcohol (C) in an amount in the range of 1.5 to 15 mols per mol of the amino compound (A).

8. A composition as claimed in any preceding claim characterised in that the reaction products (Ia) and (Ib) are obtained by using the formaldehyde (B) in an amount in the range of 1.5 to 10 mols per mol of the amino compound (A).

9. A composition as claimed in any preceding claim characterised in that the macromolecular compound (II) contains one or more of the following functional groups : hydroxyl group, carboxyl group, epoxy group, amide group, methylolamide group, alkoxymethylolamide group, amino group, silanol group, and alkoxysilyl group.

10. A composition as claimed in any preceding claim, characterised in that the macromolecular compound (II) is at least one of the following resins: acrylic resin, vinyl resin, alkyd resin, saturated polyester resin, epoxy resin, urethane resin, fluorocarbon resin, polyamide resin, siloxane resin, silicon-modified polyester resin, and silicon-modified acrylic resin.

11. A composition as claimed in any preceding claim characterised in that the nonvolatile weight ratio of the aminoformaldehyde resin (I) to the macromolecular compound (II) is in the range of 5 to 70 : 95 to 30.

12. A composition as claimed in any preceding claim characterised in that it further comprises an antioxidant, preferably in an amount in the range of 0.01 to 10% be weight, based on the nonvolatile amount of the aminoformaldehyde resin (I).

13. A composition as claimed in Claim 12 characterised in that the antioxidant is a hindered phenol.

14. A composition as claimed in any preceding claim characterised in that the carboguanamine (a) is cyclohexanecarboguanamine.